# EUROPEAN PATENT SPECIFICATION

(11) **EP 4 158 175 B1**
(45) Date of publication and mention of the grant of the patent: **07.10.2026**
(21) Application number: 21734674.1
(22) Date of filing: 28.05.2021
(51) Int. Cl.: F02D 41/00, F02D 41/12, F02M 26/25

(54) **ENGINE EXHAUST TREATMENT THROUGH TEMPERATURE MANAGEMENT**
MOTORABGASBEHANDLUNG DURCH TEMPERATURMANAGEMENT
TRAITEMENT D'ÉCHAPPEMENT DE MOTEUR PAR GESTION DE TEMPÉRATURE

(30) Priority: 29.05.2020 US 202016887587
(43) Date of publication of application: 05.04.2023
(73) Proprietor: Woodward, Inc., Fort Collins, Colorado 80524 (US)
(72) Inventor: HAN, Yi, Fort Collins, Colorado 80524 (US); CHIU, James Po-Chang, Fort Collins, Colorado 80524 (US)
(74) Representative: Fish & Richardson P.C.
(86) International application number: PCT/US2021/034861
(87) International publication number: WO 2021/243209

(56) References cited:
- DE-A1- 102015 216 851
- DE-A1- 102017 202 054
- US-A1- 2016 363 064

## Description

### CLAIM OF PRIORITY

This application claims priority to U.S. Patent Application No. 16/887,587 filed on May 29, 2020.

### TECHNICAL FIELD

This disclosure relates to emission control systems for internal combustion engines.

### BACKGROUND

Exhaust gas recirculation (EGR) systems can be added to internal combustion engine systems to reduce NOx emissions and reduce knock tendency. In such a system, an amount of exhaust gas is added to the air and/or fuel mixture within the air-intake manifold of the engine. The "classic" high-pressure loop EGR system plumbs the exhaust gas directly to the intake manifold.

Emission control systems for internal combustion engines commonly implement catalytic converter devices to convert harmful exhaust gases into inert gases such as carbon dioxide and water vapor. Catalytic converters reduce toxic gases and pollutants in exhaust gas into less-toxic pollutants by catalyzing a redox. Catalytic converters typically need to be at high temperatures (e.g., 800 °F or 426 °C) in order to operate as intended. Therefore, they are placed close to the engine along the exhaust line, in order to use the waste heat of the exhaust gasses to maintain an elevated operation temperature. If a catalytic converter is caused or allowed to operate below the temperature is was designed for, its efficiency will generally decrease and the engine's emissions will generally increase.

DE 10 2017 202054 A1 A describes a control unit for an exhaust gas recirculation (EGR) system of a vehicle with an internal combustion engine. The control unit is configured to detect that the internal combustion engine is in a thrust mode in which the internal combustion engine is driven by the vehicle. The control unit is further configured to cause the EGR system to be put in a circulation mode in which only exhaust gases are present at an input of the internal combustion engine, which exhaust gases have been routed from an output of the internal combustion engine to the input of the internal combustion engine via an EGR path. In addition, the control unit is configured to perform a diagnosis relating to a component of the EGR system while the EGR system is in the circulation mode and while the internal combustion engine is in the thrust mode.

DE 10 2015 216851 A1 describes a motor vehicle having an engine, an intake air train, an exhaust gas train, a nitrogen oxide adsorber arranged in the exhaust gas train, an injector which is formed to introduce fuel into a combustion chamber of the engine or into the exhaust gas train and a low-pressure exhaust gas recirculation system having an exhaust gas recirculation train configured to direct exhaust gas from the exhaust gas train from an exhaust gas extraction point located downstream of the nitrogen oxide adsorber to an exhaust gas injection point located in the intake air train, thereby forming a loop. According to DE 10 2015 216851 A1, the motor vehicle comprises an exhaust gas cooler arranged in the exhaust gas recirculation train and an exhaust gas cooler bypass configured to guide recirculated exhaust gas around the exhaust gas cooler. The motor vehicle has at least one valve for throttling a mass flow of fresh air, and a control unit which is designed to detect a thrust operation of the motor vehicle and to set the at least one valve during the thrust operation in such a way that charge gas comprising recirculated exhaust gas can be supplied to the engine, and at the same time to actuate the injector.

US 2016/363064 A1 describes a system and methods that maintain efficiency of an aftertreatment component during a motoring event or condition of an internal combustion engine while also lowering oil consumption and particulate number emissions.

### SUMMARY

In general, this document describes technologies relating to emission control systems for internal combustion engines. An engine system, a non-transitory computer storage medium, and a method according to the present invention are set out in the independent claims. Further advantageous developments of the present invention are set out in the dependent claims.

The systems and techniques described here may provide one or more of the following advantages. First, a system can reduce or eliminate the amount of temperature drop within catalytic converters during operation of internal combustion engines. Second, the system can provide improved emissions performance for internal combustion engines. Third, for some engine configurations, the improvement can be implemented with minimal or no modification modifications.

The details of one or more implementations are set forth in the accompanying drawings and the description below. Other features and advantages will be apparent from the description and drawings, and from the claims.

### DESCRIPTION OF DRAWINGS

FIG. 1 is a schematic diagram that shows an example of a system for temperature management in an exhaust after-treatment system.
FIG. 2 is a schematic diagram that shows the example system of FIG. 1 in another operational configuration.
FIG. 3 is flow chart that shows an example of a process for temperature management in an exhaust after-treatment system.
FIG. 4 is a schematic diagram of an example of a generic computer system.

### DETAILED DESCRIPTION

This document describes systems and techniques for controlling and improving the performance of emission control systems for internal combustion engines. In general, catalytic converter system are designed to operate at high temperatures, and those temperatures are typically achieved as a byproduct of the waste heat provided by the exhaust gasses they are designed to treat. However, in some situations, much cooler exhaust gasses can be caused to pass though the catalytic converter, thus cooling the catalytic converter and reducing its ability to remove pollutants until it can be brought back up to a proper operational temperature. This document describes solutions that reduces or stops the flow of cool exhaust gasses though the emissions control system, which helps maintain high catalytic converter temperatures and help maintain the efficiency of the after-treatment it provides to exhaust gasses.

An example of situation in which a catalytic converter can be cooled can occur when an engine is motoring or engine braking. When a vehicle is decelerating based on engine resistance, fuel supply to the engine is nearly or completely stopped, and the forward motion and momentum of the vehicle causes the engine to keep turning (e.g., based on rotation fed back from the turning drive wheels and drive train to the engine). Under conditions such as these, the engine essentially acts as an air pump, with the rotation of the engine drawing cool air from an intake, through the cylinders without heat-generating combustion, and out the exhaust to the catalytic converter. This cool, uncombusted air, cools the catalytic converter. When the engine resumes combustion to provide drive power, the combusted gasses pass through the cooled catalytic converter and are treated with a lower degree of effectiveness and/or efficiency until the converter's temperature recovers. During such times, the exhaust gasses can contain a relatively higher level of pollutants, possibly high enough to cause the engine (or the vehicle it is in) to fail emissions tests.

In general, this document describes solutions that reduce or prevent such losses in exhaust after-treatment efficiency and/or effectiveness by reducing the cooling effect described in the previous paragraph. As will be described in more detail in the remainder of this document, in general this improvement in performance is achieved by detecting a motoring condition and responding by recycling hot exhaust gasses back through the engine, rather than allow the engine to ingest cool intake air and pump it through the catalytic converter.

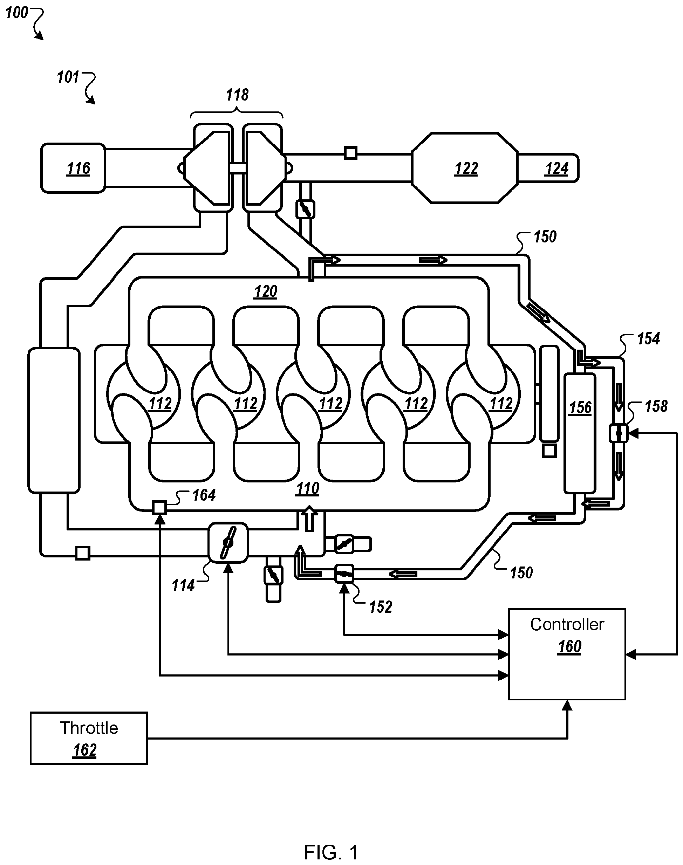

FIG. 1 is a schematic diagram that shows an example of an engine system 100 for temperature management in an exhaust after-treatment system. In some examples, engine exhaust after-treatment efficiency is typically related to catalyst temperature, where a low temperature can result in low after-treatment efficiency. Maintaining the temperature high enough during normal operation can be challenging. One of the challenges in particular is during motoring conditions, where the motion of the wheels of a vehicle, when it is connected to the engine (automatic transmission in drive or manual in gear with clutch engaged), will keep the engine rotating and the fuel can be shut off (e.g., to improve fuel economy of the vehicle). But, when fuel is shut off, uncombusted air flows though the engine, and much cooler air flows through the catalyst, reducing the temperature of the catalyst. If the temperature of the catalyst goes too low, the conversion efficiency can be reduced and exhaust emissions can go up. An engine can fail an emissions certification test if conversion efficiency goes too low. This could be any engine with any appropriate fuel, including, but not limited to, gasoline, diesel, natural gas, propane, and any fuel that an internal combustion engine can use in order to operate.

Internal combustion engines can produce harmful emissions from the exhaust gasses. These emissions are regulated by government agencies, such as the Environmental Protection Agency in the United States. Typical emissions that are regulated include (but are not limited to) oxides of nitrogen (NOx), carbon monoxide (CO), and hydrocarbons (HC) (e.g., including methane). To reduce emissions in the exhaust gas to the regulated levels, exhaust after treatment is used, typically in the form of a catalyst (e.g., in a catalytic converter). Exhaust after-treatment typically implements high temperatures to be effective at reducing emissions. For example, for some catalysts a temperature of about 462 °C may be needed to get about a 90% conversion efficiency for methane. Natural gas engines, such as the OH6 applications, in particular can have an issue with meeting methane emissions because of the higher temperature requirement compared to other regulated emissions for high conversion efficiency.

The system 100 includes an internal combustion engine 101 having an intake manifold 110 configured to receive and convey air to a collection of combustion chambers 112. An intake valve 114 is arranged upstream of the intake manifold 110, and is configured to at least partially regulate an airflow from an air intake 116 through a compressor 118 (e.g., turbo) into the intake manifold 110. The engine 101 also includes an exhaust manifold 120 configured to receive combustion products (e.g., exhaust gasses) from the combustion chamber 112, and a catalytic converter 122 configured to provide after-treatment of the exhaust gasses before they exit an exhaust outlet 124 (e.g., tailpipe).

In some embodiments, the intake valve 114 can be a valve that is added to an existing intake system. For example, an existing engine system can be modified by adding the intake valve 114 and other exhaust temperature management components that will be described below. In some embodiments, the intake valve 114 can be an existing throttle valve of an engine. For example, the operation of an engine's throttle body can be modified to perform additional functions associated with exhaust temperature management, as will be discussed in more detail below.

The system 100 also includes a recirculation flow passage 150 that is configured to convey exhaust gasses from the exhaust manifold 120 to the intake manifold 110. A controllable exhaust gas recirculation flow control valve 152 is configured to regulate gas flow through the recirculation flow passage 150. The recirculation flow passage 150 includes a bypass passage 154 configured to convey exhaust gasses around a heat exchanger 156 (e.g., intercooler) of the recirculation flow passage 150 and a bypass flow control valve 158 configured to control gas flow through the bypass passage 154.

In some embodiments, the recirculation flow passage 150 and its components can be a collection of components that can added or retrofitted to an existing engine system. In some embodiments, recirculation flow passage 150 can be an exhaust gas return flow passage of an exhaust gas return (EGR) system, and the recirculation flow control valve is an exhaust gas return flow valve of the exhaust gas return system. For example, an otherwise stock (e.g., factory supplied) EGR system can be repurposed to perform the additional functions of the recirculation flow passage 150.

The system 100 also includes a controller 160 (e.g., a standalone controller, controller functions integrated with an engine control unit (ECU)) coupled to the intake valve 114 and the recirculation flow control valve 152. The controller 160 is configured to determine the existence of conditions that correspond to the engine system 100 being in a motoring condition (e.g., the engine 101 is being driven by external mechanical forces to pump air from the intake manifold 110 to the exhaust manifold 120) or is otherwise being caused to ingest and exhaust cool air. In some implementations, the motoring or other conditions can be determined from a throttle position signal 162, engine RPMs, engine vacuum, an ECU output, exhaust temperature, an accelerometer, or combinations of these and/or any other appropriate input that can be used to determine if the engine 101 is operating under conditions that might exhaust cool air through the catalytic converter 122. The controller 160 is configured to detect such operating conditions and respond by opening the recirculation flow control valve 152 and the bypass flow control valve 158 during the motoring (or other) condition, and close the intake valve 114, during the motoring (or other) condition.

The intake manifold 110 includes a pressure sensor 164. The controller 160 is also configured to receive sensor signals from the pressure sensor 164 to determine a partial vacuum in the intake manifold 110 and, in response, adjust the intake valve 114 to reduce or eliminate the partial vacuum. Depending on the flow capacity of the recirculation flow passage 150, a small throttle opening (e.g., and small flow rate) may be commanded to prevent significant vacuum in intake manifold 110. However, the majority of the flow through the engine 101 during motoring is thorough the recirculation flow passage 150.

To reduce the amount of cold air that flows through the exhaust after-treatment during motoring events, the recirculation flow passage 150 works as follows. Suppose the engine 101 is a four-stroke engine that has six cylinders and its firing order is 1-5-3-6-2-4. During motoring, there is not any firing event, when cylinder 1 is in intake stroke, the piston in cylinder 1 moves downwards to create a vacuum in the intake manifold 110 lower than ambient air pressure. At the same time, both cylinder 3 and cylinder 5 are partially in exhaust stroke, which means the pistons in these two cylinders are moving upwards and provide pressure potential to drive flow into cylinder 1 through the recirculation flow passage 150, as the intake manifold 110 is kept under ambient condition. Similar sequences take place for the other cylinders to keep the recirculation flow passage 150 actively flowing warm gas in a circuit, and only small amount of flow passes through exhaust after-treatment. In this way, the exhaust after-treatment temperature remains high. The recirculation flow passage 150, and/or the intake valve 114 can be opened to avoid excessive vacuum in the intake manifold 110 and to limit the amount of fresh cold air passing through the exhaust after-treatment while reducing the vacuum in the intake manifold 110.

In the illustrated example, the system 100 is in a temperature management configuration. The controller 160 has closed the intake valve 114 to a specified or predetermined motoring intake configuration, opened the recirculation flow control valve 152 a specified or predetermined motoring recirculation configuration, and opened the bypass flow control valve 158 (e.g., in response to determining that a motoring condition exists). In this configuration, cool or cold air from the air intake 116 is mostly or entirely prevented from entering the engine 101, and hot exhaust gasses in the exhaust manifold 120 are recycled back to the intake manifold 110 through the recirculation flow passage 150, bypassing the heat exchanger 156. The recirculated hot exhaust gasses re-enter the intake manifold and are pumped through the combustion chambers 112 (e.g., by engine pistons driven by the motoring condition) to the exhaust manifold 120 again.

By recycling the hot exhaust gasses through the engine 101 and by preventing cold fresh air from being pumped to the exhaust manifold 120 and out through the catalytic converter 122, cool fresh air can be prevented from being provided to the catalytic converter 122, and the resulting cooling effect of the cool fresh air can be avoided, which can reduce or avoid the resulting temperature drop in the catalytic converter 122. With the temperature of the catalytic converter 122 maintained high, at or near its designed operational temperature, the effectiveness of the catalytic converter 122 at removing pollutants remains at or near its designed operational levels. In situations in which a temperature drop in the catalytic converter 122 is unavoidable (e.g., long periods of downhill motoring), the recycling technique can reduce the cooling effect that would otherwise happen. By reducing the temperature drop, the amount of time that the catalytic converter 122 needs to return to its designed operational temperature after normal combustion processes resume is reduced, the amount of time the catalytic converter 122 operates at less than its designed efficiency is reduced. By reducing either or both the negative impact of cooling and the amount of time during which the negative impact exists, the total increase in tailpipe emissions due to motoring is also reduced.

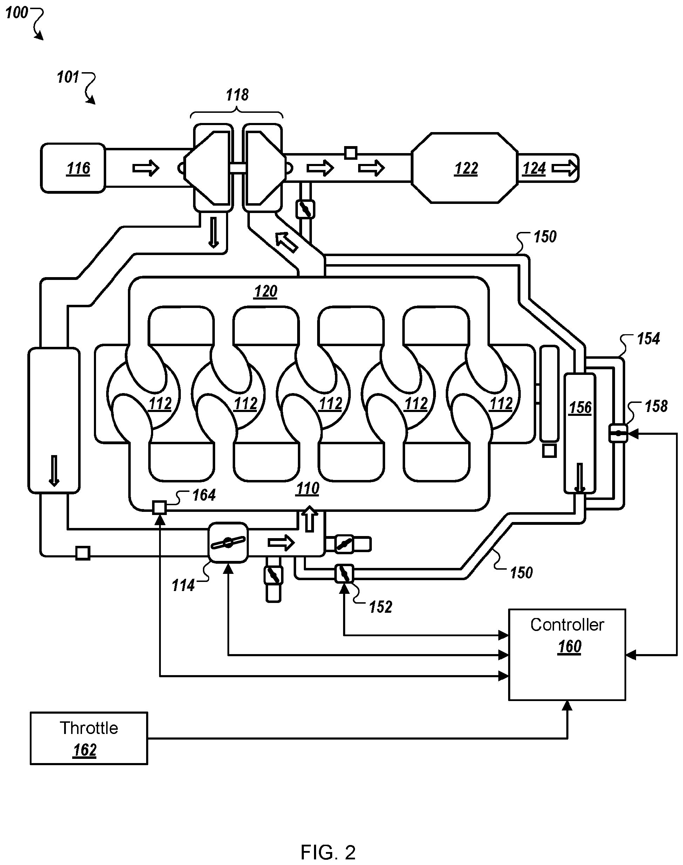

FIG. 2 is a schematic diagram that shows the example system 100 of FIG. 1 in another operational configuration. In the example of FIG. 1, the system is shown in a recycling or motoring configuration (e.g., the controller 160 has detected a motoring condition and has configured the system 100 to preserve catalytic temperatures by recycling hot exhaust). In the example of FIG. 2, the system is shown in a non-recycling or non-motoring (e.g., normal operational condition).

In the illustrated example, the intake valve 114 is controlled (e.g., opened) based on a throttle position signal 162 (e.g., a throttle demand), and the recirculation flow control valve 152 is controlled (e.g., by the controller 160 or an ECU) based on an exhaust gas return EGR demand. For example, the controller 160 can determine that the engine system 100 is not in a motoring condition, and run the engine 101 in a normal operational mode in which the intake valve 114 (e.g., a throttle) is based on a throttle input such as an accelerator pedal or a governor, and the recirculation flow control valve 152 can be shut completely or it can be controllably opened to perform EGR functions for the engine 101.

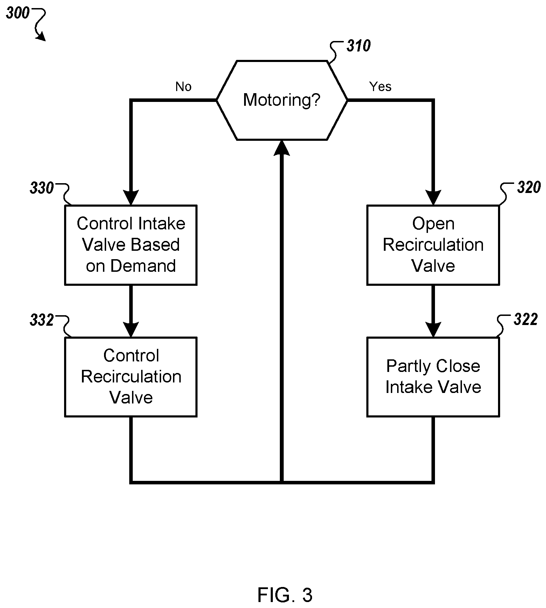

FIG. 3 is flow chart that shows an example of a process 300 for temperature management in an exhaust after-treatment system. In some implementations, the process 300 can be performed by the example engine system 100 of FIGs. 1 and 2.

At 310, a determination is made. If an internal combustion engine is in a motoring condition, then the process 300 continues at 320. If not, then the process continues at 330. In some implementations, determining that the internal combustion engine is in the motoring condition can include determining that the internal combustion engine is being driven by external forces to pump air from the intake manifold to the exhaust manifold. For example, the example controller 160 of FIGs. 1 and 2 can determine whether or not the engine system 100 is in a motoring condition or any other appropriate condition that can cause relatively cooler air to flow through and potentially reduce the relatively hotter temperature of the catalytic converter 122.

At 320, a recirculation flow control valve, configured to regulate gas flow through the recirculation flow passage, is opened during the motoring condition based the determining. For example, the recirculation flow control valve 152 is opened to fluidically connect the exhaust manifold 120 to the intake manifold 110 through the recirculation flow passage 150, as shown in FIG. 1.

At 322, an intake valve, arranged upstream of the intake manifold and configured to restrict airflow to the intake manifold, is closed during the motoring condition based the determining. For example, the intake valve 114 is completely or nearly closed to block or reduce the flow of cool air from the air intake 116 to the intake manifold 110, as shown in FIG. 1. In some embodiments, the intake valve can be a throttle of the internal combustion engine 101.

According to the present invention, closing the intake valve includes determining a partial vacuum in the intake manifold, and adjusting the intake valve to reduce or eliminate the partial vacuum. For example, the controller 160 can receive air pressure sensor signals from the pressure sensor 164 to identify that the operation of the engine 101 is drawing the air pressure in the intake manifold 110 below a specified pressure (e.g., ambient air pressure), and respond by partly opening the intake valve 114 to allow additional air to enter the intake manifold 110.

At 330, the intake valve is controlled based on a throttle demand, based on determining that the internal combustion engine is not in a motoring condition. For example, controller 160 can determine that the engine 101 is operating normally (e.g., not motoring) and cause the intake valve 114 to open and close based on the throttle position signal 162 (e.g., accelerator pedal, governor, cruise control).

At 332, the recirculation flow control valve is controlled based on the determining that the internal combustion engine is not in a motoring condition. For example, in embodiments in which the engine system 100 is not configured to perform EGR functions, the controller 160 can close the recirculation flow control valve 152 to resist gas flow from the exhaust manifold 120 to the intake manifold 110 through the recirculation flow passage 150. In another example, in embodiments in which the engine system 100 is configured to perform EGR functions using the recirculation flow passage 150, the controller 160 can controllably open and close the recirculation flow control valve 152 to perform EGR functions for the engine 101.

In some implementations, the process 300 can also include opening, during the motoring condition and based the determining, a bypass control flow valve configured to control gas flow through a bypass passage, wherein the bypass passage is configured to convey exhaust gasses around a heat exchanger arranged in the gas recirculation flow passage, determining that the internal combustion engine is not in a motoring condition, and closing, based on determining that the internal combustion engine is not in a motoring condition, the bypass flow control valve. For example, the recirculation flow passage 150 includes the heat exchanger 156, which in some embodiments can be an exhaust gas intercooler that is used to cool exhaust gasses during EGR operations, but would provide unwanted cooling during motoring conditions. During motoring, the bypass flow control valve 158 can be opened to allow hot gasses to bypass the heat exchanger 156 through the bypass passage 154. During non-motoring (e.g., normal) engine operating conditions, the bypass flow control valve 158 can be closed to direct hot gasses through the heat exchanger 156.

In some implementations, the process 300 can include providing the recirculation flow passage, providing the recirculation flow control valve, fluidically connecting the recirculation flow passage to the exhaust manifold at a first end of the recirculation flow passage, fluidically connecting the recirculation flow passage to the intake manifold at a second end of the recirculation flow passage, providing a controller configured to determine the motoring condition and control the recirculation control valve and the intake valve based on the motoring condition. For example, the recirculation flow passage 150 and its components can be a collection of components that can added or retrofitted to an existing engine system.

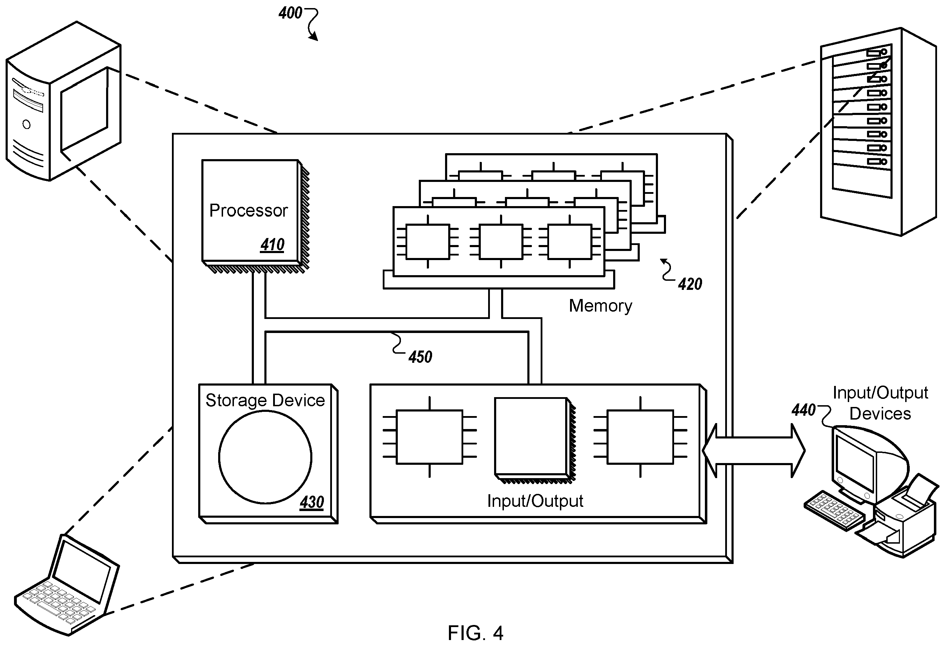

FIG. 4 is a schematic diagram of an example of a generic computer system 400. The system 400 can be used for the operations described in association with the process 300 according to one implementation. For example, the system 400 may be included in all or part of the example controller 160 of FIGs. 1 and 2.

The system 400 includes a processor 410, a memory 420, a storage device 430, and an input/output device 440. Each of the components 410, 420, 430, and 440 are interconnected using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430 to display graphical information for a user interface on the input/output device 440.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 may be a floppy disk device, a hard disk device, an optical disk device, or a tape device.

The input/output device 440 provides input/output operations for the system 400. In one implementation, the input/output device 440 includes a keyboard and/or pointing device. In another implementation, the input/output device 440 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

Although a few implementations have been described in detail above, other modifications are possible. In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

Although a few implementations have been described in detail above, other modifications are possible. For example, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are possible as long as they are within the scope of the following claims.

## Claims

1. An engine system (100) comprising:
an intake manifold (110) configured to receive and convey air to a combustion chamber (112);
an intake valve (114) upstream of the intake manifold (110) and configured to regulate an air flow into the intake manifold (110);
an exhaust manifold (120) configured to receive combustion products from the combustion chamber (112);
a recirculation flow passage (150) configured to convey exhaust gasses from the exhaust manifold (120) to the intake manifold (110);
a recirculation flow control valve (152) configured to regulate gas flow through the recirculation flow passage (150); and
a controller (160) coupled to the intake valve (114) and the recirculation flow control valve (152), the controller (160) configured to
determine that the engine system (100) is in a motoring condition,
open, during the motoring condition and based on the determining, the recirculation flow control valve (152) to a specified motoring recirculation configuration, and
close, during the motoring condition and based on the determining, the intake valve (114) to a specified motoring intake configuration,
**characterised in that**
closing the intake valve (114) to the specified motoring intake configuration comprises
i) determining a partial vacuum in the intake manifold (110), and
ii) adjusting the intake valve (114) to reduce or eliminate the partial vacuum.

2. The engine system (100) of claim 1, wherein the intake valve (114) is a throttle of the engine system (100).

3. The engine system (100) of claim 1 or 2, wherein determining that the engine system (100) is in the motoring condition comprises determining existence of conditions that correspond to the engine system (100) being driven by external forces to pump air from the intake manifold (110) to the exhaust manifold (120).

4. The engine system (100) of any one of claims 1 to 3, wherein the controller (160) is further configured to:
determine that the engine system (100) is not in the motoring condition;
control, based on the determining that the engine system (100) is not in the motoring condition, the intake valve (114) based on a throttle demand; and
control, based on the determining that the engine system (100) is not in the motoring condition, the recirculation flow control valve (152) based on an exhaust gas return (EGR) demand;
wherein the specified motoring recirculation configuration opens the recirculation flow control valve (152) to allow recirculation of exhaust gasses through the recirculation flow passage (150) and the specified motoring intake configuration closes the intake valve (114) to block the air flow into the intake manifold (110).

5. The engine system (100) of any one of claims 1 to 4, wherein the recirculation flow passage (150) is an exhaust gas return flow passage of an exhaust gas return (EGR) system, and the recirculation flow control valve (152) is an exhaust gas return flow valve of the exhaust gas return system.

6. The engine system (100) of claim 5, further comprising:
a bypass passage (154) configured to convey exhaust gasses around a heat exchanger (156) of the exhaust gas return flow passage; and
a bypass flow control valve (158) configured to control gas flow through the bypass passage (154);
wherein the controller (160) is further configured to:
open, during the motoring condition and based on the determining, the bypass flow control valve (158); and
close, based on determining that the engine system (100) is not in the motoring condition, the bypass flow control valve (158).

7. A non-transitory computer storage medium encoded with a computer program, the computer program comprising instructions that when executed by data processing apparatus cause the data processing apparatus to perform operations comprising:
determining that an internal combustion engine (101) is in a motoring condition, the internal combustion engine (101) having a combustion chamber (112), an intake manifold (110) configured to receive and convey air to the combustion chamber (112), an exhaust manifold (120) configured to receive combustion products from the combustion chamber (112), and a gas recirculation flow passage (150) configured to convey exhaust gasses from the exhaust manifold (120) to the intake manifold (110) through a controllable exhaust gas recirculation flow control valve (152);
opening, during the motoring condition and based on the determining, a recirculation flow control valve (152) to a specified motoring recirculation configuration to regulate gas flow through the recirculation flow passage (150); and
closing, during the motoring condition and based on the determining, an intake valve (114) arranged upstream of the intake manifold (110), to a specified motoring intake configuration to restrict air flow to the intake manifold (110);
**characterised in that**
closing the intake valve (114) to the specified motoring intake configuration comprises
determining a partial vacuum in the intake manifold (110), and
adjusting the intake valve (114) to reduce or eliminate the partial vacuum.

8. The non-transitory computer storage medium of claim 7, the operations further comprising:
determining that the internal combustion engine (101) is not in the motoring condition;
controlling, based on the determining that the internal combustion engine (101) is not in the motoring condition, the intake valve (114) based on a throttle demand; and
controlling, based on the determining that the internal combustion engine (101) is not in the motoring condition, the recirculation flow control valve (152) based on an exhaust gas return (EGR) demand.

9. A method comprising:
determining that an internal combustion engine (101) is in a motoring condition, the internal combustion engine (101) having a combustion chamber (112), an intake manifold (110) configured to receive and convey air to the combustion chamber (112), an exhaust manifold (120) configured to receive combustion products from the combustion chamber (112), and a gas recirculation flow passage (150) configured to convey exhaust gasses from the exhaust manifold (120) to the intake manifold (110) through a controllable recirculation flow control valve (152);
opening, during the motoring condition and based on the determining, a recirculation flow control valve (152) to a specified motoring recirculation configuration to regulate gas flow through the recirculation flow passage (150); and
closing, during the motoring condition and based on the determining, an intake valve (114) arranged upstream of the intake manifold (110), to a specified motoring intake configuration to restrict air flow to the intake manifold (110);
**characterised in that**
closing the intake valve (114) to the specified motoring intake configuration comprises
determining a partial vacuum in the intake manifold (110), and
adjusting the intake valve (114) to reduce or eliminate the partial vacuum.

10. The method of claim 9, or the non-transitory computer storage medium of claim 7 or 8, wherein the intake valve (114) is a throttle of the internal combustion engine (101).

11. The method of claim 9 or 10, or the non-transitory computer storage medium of claims 7, 8, or 10, wherein determining that the internal combustion engine (101) is in the motoring condition comprises determining existence of conditions that correspond to the internal combustion engine (101) being driven by external forces to pump air from the intake manifold (110) to the exhaust manifold (120).

12. The method of any one of claims 9 to 11, further comprising:
determining that the internal combustion engine (101) is not in the motoring condition;
controlling, based on the determining that the internal combustion engine (101) is not in the motoring condition, the intake valve (114) based on a throttle demand; and
controlling, based on the determining that the internal combustion engine (101) is not in the motoring condition, the recirculation flow control valve (152) based on an exhaust gas return (EGR) demand.

13. The method of any one of claims 9 to 12, wherein:
the specified motoring recirculation configuration opens the recirculation flow control valve (152) to allow recirculation of exhaust gasses through the recirculation flow passage (150); and
the specified motoring intake configuration closes the intake valve (114) to block the air flow into the intake manifold (110).

14. The method of any one of claims 9 to 13, further comprising:
opening, during the motoring condition and based on the determining, a bypass flow control valve (158) configured to control gas flow through a bypass passage (154), wherein the bypass passage (154) is configured to convey exhaust gasses around a heat exchanger (156) arranged in the gas recirculation flow passage (150);
determining that the internal combustion engine (101) is not in the motoring condition; and
closing, based on determining that the internal combustion engine (101) is not in the motoring condition, the bypass flow control valve (158).

15. The method of any one of claims 9 to 14, further comprising modifying the internal combustion engine (101), the modifying comprising:
providing the recirculation flow passage (150);
providing the recirculation flow control valve (152);
fluidically connecting the recirculation flow passage (150) to the exhaust manifold (120) at a first end of the recirculation flow passage (150);
fluidically connecting the recirculation flow passage (150) to the intake manifold (110) at a second end of the recirculation flow passage (150); and
providing a controller (160) configured to determine the motoring condition and control the recirculation flow control valve (152) and the intake valve (114) based on the motoring condition.

## Patentansprüche

1. Motorsystem (100), umfassend:
einen Ansaugkrümmer (110), der dazu ausgelegt ist, Luft aufzunehmen und zu einer Brennkammer (112) zu befördern;
ein Einlassventil (114) stromaufwärts des Ansaugkrümmers (110) und dazu ausgelegt, einen Luftstrom in den Ansaugkrümmer (110) zu regeln;
einen Abgaskrümmer (120), dazu ausgelegt, Verbrennungsprodukte aus der Brennkammer (112) aufzunehmen;
einen Rezirkulationsströmungskanal (150), dazu ausgelegt, Abgase von dem Abgaskrümmer (120) zu dem Ansaugkrümmer (110) zu befördern;
ein Rezirkulationsströmungsregelventil (152), dazu ausgelegt, den Gasstrom durch den Rezirkulationsströmungskanal (150) zu regeln; und
eine Steuerung (160), gekoppelt mit dem Einlassventil (114) und dem Rezirkulationsströmungsregelventil (152), wobei die Steuerung (160) ausgelegt ist zum
Bestimmen, dass sich das Motorsystem (100) in einem Motorbetriebszustand befindet,
Öffnen, während des Motorbetriebszustands und basierend auf dem Bestimmen,
des Rezirkulationsströmungsregelventils (152) auf eine spezifizierte Motorbetriebsrezirkulationskonfiguration, und
Schließen, während des Motorbetriebszustands und basierend auf dem Bestimmen, des Einlassventils (114) auf eine spezifizierte Motoreinlasskonfiguration, und
**dadurch gekennzeichnet, dass** das Schließen des Einlassventils (114) auf die spezifizierte Motoreinlasskonfiguration umfasst:
i) Bestimmen eines Unterdrucks im Ansaugkrümmer (110) und
ii) Einstellen des Einlassventils (114), um den Unterdruck zu verringern oder zu beseitigen.

2. Motorsystem (100) nach Anspruch 1, wobei das Einlassventil (114) eine Drossel des Motorsystems (100) ist.

3. Motorsystem (100) nach Anspruch 1 oder 2, wobei das Bestimmen, dass sich das Motorsystem (100) in dem Motorbetriebszustand befindet, das Bestimmen des Vorliegens von Bedingungen umfasst, die der Situation entsprechen, dass das Motorsystem (100) durch externe Kräfte dazu angetrieben wird, Luft von dem Ansaugkrümmer (110) zu dem Auslasskrümmer (120) zu pumpen.

4. Motorsystem (100) nach einem der Ansprüche 1 bis 3, wobei die Steuerung (160) ferner ausgelegt ist zum:
Bestimmen, dass sich das Motorsystem (100) nicht im Motorzustand befindet;
Steuern, basierend auf dem Bestimmen, dass sich das Motorsystem (100) nicht im Motorzustand befindet, des Einlassventils (114) basierend auf der Drosselanforderung; und
Steuern, basierend auf dem Bestimmen, dass sich das Motorsystem (100) nicht im Motorzustand befindet, des Rezirkulationsströmungsregelventils (152) basierend auf einer Abgasrückführungs(AGR)-Anforderung;
wobei die spezifizierte Motorbetriebsrezirkulationskonfiguration das Rezirkulationsströmungsregelventil (152) öffnet, um eine Rezirkulation von Abgasen durch den Rezirkulationsströmungskanal (150) zu ermöglichen, und die spezifizierte Motoreinlasskonfiguration das Einlassventil (114) schließt, um den Luftstrom in den Ansaugkrümmer (110) zu blockieren.

5. Motorsystem (100) nach einem der Ansprüche 1 bis 4, wobei der Rezirkulationsströmungskanal (150) ein Abgasrückführungsströmungsdurchgang eines Abgasrückführungssystems (AGR) ist und das Rezirkulationsströmungsregelventil (152) ein Abgasrückführungsströmungsventil des Abgasrückführungssystems ist.

6. Motorsystem (100) nach Anspruch 5, ferner umfassend:
einen Bypasskanal (154), dazu ausgelegt, Abgase um einen Wärmetauscher (156) des Abgasrückführungsströmungsdurchgangs herum zu befördern; und
ein Bypassströmungsregelventil (158), dazu ausgelegt, den Gasstrom durch den Bypasskanal (154) zu regeln; und
wobei die Steuerung (160) ferner ausgelegt ist zum:
offen, während des Motorbetriebszustands und basierend auf dem Bestimmen, des Bypassströmungsregelventils (158); und
Schließen, basierend auf dem Bestimmen, dass sich das Motorsystem (100) nicht im Motorbetriebszustand befindet, des Bypassströmungsregelventils (158).

7. Nichttransitorisches Computerspeichermedium, das mit einem Computerprogramm codiert ist, wobei das Computerprogramm Anweisungen umfasst, die bei Ausführung durch eine Datenverarbeitungseinrichtung bewirken, dass die Datenverarbeitungseinrichtung Operationen durchführt, die umfassen:
Bestimmen, dass sich ein Verbrennungsmotor (101) in einem Motorbetriebszustand befindet, wobei der Verbrennungsmotor (101) eine Brennkammer (112), einen Einlasskrümmer (110), dazu ausgelegt, Luft aufzunehmen und zu der Brennkammer (112) zu befördern, einen Abgaskrümmer (120), dazu ausgelegt, Verbrennungsprodukte aus der Brennkammer (112) aufzunehmen, und einen Gasrezirkulationsströmungskanal (150), dazu ausgelegt, Abgase von dem Abgaskrümmer (120) durch ein regelbares Abgasrezirkulationsströmungsregelventil (152) zu dem Ansaugkrümmer (110) zu befördern;
Öffnen, während des Motorbetriebszustands und basierend auf dem Bestimmen, eines Rezirkulationsströmungsregelventils (152) auf eine spezifizierte Motorbetriebsrezirkulationskonfiguration, um den Gasstrom durch den Rezirkulationsströmungskanal (150) zu regeln; und
Schließen, während des Motorbetriebszustands und basierend auf dem Bestimmen, eines Einlassventils (114), das stromaufwärts des Ansaugkrümmers (110) angeordnet ist, auf eine spezifizierte Motoreinlasskonfiguration, um den Luftstrom zum Ansaugkrümmer (110) zu beschränken;
**dadurch gekennzeichnet, dass** das Schließen des Einlassventils (114) auf die spezifizierte Motoreinlasskonfiguration umfasst:
Bestimmen eines Unterdrucks im Ansaugkrümmer (110) und
Einstellen des Einlassventils (114), um den Unterdruck zu verringern oder zu beseitigen.

8. Nichtflüchtiges Computerspeichermedium nach Anspruch 7, wobei die Operationen ferner umfassen:
Bestimmen, dass sich der Verbrennungsmotor (101) nicht im Motorbetriebszustand befindet;
Steuern, basierend auf dem Bestimmen, dass sich der Verbrennungsmotor (101) nicht im Motorbetriebszustand befindet, des Einlassventils (114) basierend auf der Drosselanforderung; und
Steuern, basierend auf dem Bestimmen, dass sich der Verbrennungsmotor (101) nicht im Motorbetriebszustand befindet, des Rezirkulationsströmungsregelventils (152) basierend auf einer Abgasrückführungs(AGR)-Anforderung.

9. Verfahren, umfassend:
Bestimmen, dass sich ein Verbrennungsmotor (101) in einem Motorbetriebszustand befindet, wobei der Verbrennungsmotor (101) eine Brennkammer (112), einen Einlasskrümmer (110), dazu ausgelegt, Luft aufzunehmen und zu der Brennkammer (112) zu befördern, einen Abgaskrümmer (120), dazu ausgelegt, Verbrennungsprodukte aus der Brennkammer (112) aufzunehmen, und einen Gasrezirkulationsströmungskanal (150), dazu ausgelegt,
Abgase von dem Abgaskrümmer (120) durch ein regelbares Rezirkulationsströmungsregelventil (152) zu dem Ansaugkrümmer (110) zu befördern;
Öffnen, während des Motorbetriebszustands und basierend auf dem Bestimmen, eines Rezirkulationsströmungsregelventils (152) auf eine spezifizierte Motorbetriebsrezirkulationskonfiguration, um den Gasstrom durch den Rezirkulationsströmungskanal (150) zu regeln; und
Schließen, während des Motorbetriebszustands und basierend auf dem Bestimmen, eines Einlassventils (114), das stromaufwärts des Ansaugkrümmers (110) angeordnet ist, auf eine spezifizierte Motoreinlasskonfiguration, um den Luftstrom zum Ansaugkrümmer (110) zu beschränken;
**dadurch gekennzeichnet, dass** das Schließen des Einlassventils (114) auf die spezifizierte Motoreinlasskonfiguration umfasst:
Bestimmen eines Unterdrucks im Ansaugkrümmer (110) und
Einstellen des Einlassventils (114), um den Unterdruck zu verringern oder zu beseitigen.

10. Verfahren nach Anspruch 9 oder nichtflüchtiges Computerspeichermedium nach Anspruch 7 oder 8, wobei das Einlassventil (114) eine Drossel des Verbrennungsmotors (101) ist.

11. Verfahren nach Anspruch 9 oder 10 oder nichtflüchtiges Computerspeichermedium nach Anspruch 7, 8 oder 10, wobei das Bestimmen, dass sich der Verbrennungsmotor (101) in dem Motorbetriebszustand befindet, das Bestimmen des Vorliegens von Bedingungen umfasst, die der Situation entsprechen, dass der Verbrennungsmotor (101) durch externe Kräfte dazu angetrieben wird, Luft von dem Ansaugkrümmer (110) zu dem Auslasskrümmer (120) zu pumpen.

12. Verfahren nach einem der Ansprüche 9 bis 11, ferner umfassend:
Bestimmen, dass sich der Verbrennungsmotor (101) nicht im Motorbetriebszustand befindet;
Steuern, basierend auf dem Bestimmen, dass sich der Verbrennungsmotor (101) nicht im Motorbetriebszustand befindet, des Einlassventils (114) basierend auf der Drosselanforderung; und
Steuern, basierend auf dem Bestimmen, dass sich der Verbrennungsmotor (101) nicht im Motorbetriebszustand befindet, des Rezirkulationsströmungsregelventils (152) basierend auf einer Abgasrückführungs(AGR)-Anforderung.

13. Verfahren nach einem der Ansprüche 9 bis 12, wobei:
die spezifizierte Motorbetriebsrezirkulationskonfiguration das Rezirkulationsströmungsregelventil (152) öffnet, um die Rückführung von Abgasen durch den Rezirkulationsströmungskanal (150) zu ermöglichen; und
die spezifizierte Motoreinlasskonfiguration das Einlassventil (114) schließt, um den Luftstrom in den Ansaugkrümmer (110) zu blockieren.

14. Verfahren nach einem der Ansprüche 9 bis 13, ferner umfassend:
Öffnen, während des Motorbetriebszustands und basierend auf dem Bestimmen, eines Bypassströmungsregelventils (158), dazu ausgelegt, den Gasstrom durch einen Bypasskanal (154) zu regeln, wobei der Bypasskanal (154) dazu ausgelegt ist, Abgase um einen Wärmetauscher (156) herum zu befördern, der in dem Gasrezirkulationsströmungskanal (150) angeordnet ist;
Bestimmen, dass sich der Verbrennungsmotor (101) nicht im Motorbetriebszustand befindet; und
Schließen, basierend auf dem Bestimmen, dass sich der Verbrennungsmotor (101) nicht im Motorbetriebszustand befindet, des Bypassströmungsregelventils (158).

15. Verfahren nach einem der Ansprüche 9 bis 14, ferner umfassend Modifizieren des Verbrennungsmotors (101), das Modifizieren umfassend:
Bereitstellen des Rezirkulationsströmungskanals (150);
Bereitstellen des Rezirkulationsströmungsregelventils (152);
fluidisches Verbinden des Rezirkulationsströmungskanals (150) mit dem Abgaskrümmer (120) an einem ersten Ende des Rezirkulationsströmungskanals (150);
fluidisches Verbinden des Rezirkulationsströmungskanals (150) mit dem Ansaugkrümmer (110) an einem zweiten Ende des Rezirkulationsströmungskanals (150); und
Bereitstellen einer Steuerung (160), dazu ausgelegt, den Motorbetriebszustand zu bestimmen und das Rezirkulationsströmungsregelventil (152) und das Einlassventil (114) basierend auf dem Motorbetriebszustand zu steuern.

## Revendications

1. Système de moteur (100) comprenant :
un collecteur d'admission (110) configuré pour recevoir et acheminer de l'air vers une chambre de combustion (112) ;
une soupape d'admission (114) en amont du collecteur d'admission (110) et configurée pour réguler un écoulement d'air dans le collecteur d'admission (110) ;
un collecteur d'échappement (120) configuré pour recevoir des produits de combustion provenant de la chambre de combustion (112) ;
un passage d'écoulement de recirculation (150) configuré pour acheminer les gaz d'échappement depuis le collecteur d'échappement (120) vers le collecteur d'admission (110) ;
une soupape de régulation d'écoulement de recirculation (152) configurée pour réguler l'écoulement de gaz à travers le passage d'écoulement de recirculation (150) ; et
un dispositif de commande (160) couplé à la soupape d'admission (114) et à la soupape de régulation d'écoulement de recirculation (152), le dispositif de commande (160) étant configuré pour
déterminer que le système de moteur (100) est en condition de moteur, ouvrir, pendant la condition de moteur et sur la base de la détermination, la soupape de régulation d'écoulement de recirculation (152) dans une configuration de recirculation de moteur spécifiée, et
fermer, pendant la condition de moteur et sur la base de la détermination, la soupape d'admission (114) à une configuration d'admission de moteur spécifiée,
**caractérisé en ce que** la fermeture de la soupape d'admission (114) à la configuration d'admission de moteur spécifiée comprend
i) la détermination d'un vide partiel dans le collecteur d'admission (110), et
ii) le réglage de la soupape d'admission (114) pour réduire ou éliminer le vide partiel.

2. Système de moteur (100) selon la revendication 1, la soupape d'admission (114) étant un papillon des gaz du système de moteur (100).

3. Système de moteur (100) selon la revendication 1 ou 2, la détermination du fait que le système de moteur (100) est dans la condition de moteur comprenant la détermination de l'existence de conditions qui correspondent au fait que le système de moteur (100) est entraîné par des forces externes pour pomper l'air du collecteur d'admission (110) vers le collecteur d'échappement (120).

4. Système de moteur (100) selon l'une quelconque des revendications 1 à 3, le dispositif de commande (160) étant en outre configuré pour :
déterminer que le système de moteur (100) n'est pas en condition de moteur ;
commander, sur la base de la détermination que le système de moteur (100) n'est pas en condition de moteur, la soupape d'admission (114) sur la base d'une demande de papillon des gaz ; et
commander, sur la base de la détermination que le système de moteur (100) n'est pas en condition de moteur, la soupape de régulation d'écoulement de recirculation (152) sur la base d'une demande de retour de gaz d'échappement (EGR) ;
la configuration de recirculation de moteur spécifiée ouvrant la soupape de régulation d'écoulement de recirculation (152) pour permettre la recirculation des gaz d'échappement à travers le passage d'écoulement de recirculation (150) et la configuration d'admission de moteur spécifiée fermant la soupape d'admission (114) pour bloquer l'écoulement d'air dans le collecteur d'admission (110).

5. Système de moteur (100) selon l'une quelconque des revendications 1 à 4, le passage d'écoulement de recirculation (150) étant un passage d'écoulement de retour de gaz d'échappement d'un système de retour de gaz d'échappement (EGR), et la soupape de régulation d'écoulement de recirculation (152) étant une soupape d'écoulement de retour de gaz d'échappement du système de retour de gaz d'échappement.

6. Système de moteur (100) selon la revendication 5, comprenant en outre :
un passage de dérivation (154) configuré pour acheminer les gaz d'échappement autour d'un échangeur de chaleur (156) du passage d'écoulement de retour de gaz d'échappement ; et
une soupape de régulation d'écoulement de dérivation (158) configurée pour commander l'écoulement de gaz à travers le passage de dérivation (154) ;
le dispositif de commande (160) étant en outre configuré pour :
ouvrir, pendant la condition de moteur et sur la base de la détermination, la soupape de régulation d'écoulement de dérivation (158) ; et
fermer, sur la base de la détermination que le système de moteur (100) n'est pas en condition de moteur, la soupape de régulation d'écoulement de dérivation (158).

7. Support de stockage informatique non transitoire codé avec un programme informatique, le programme informatique comprenant des instructions qui, lorsqu'elles sont exécutées par un appareil de traitement de données, amènent l'appareil de traitement de données à réaliser des opérations comprenant :
la détermination qu'un moteur à combustion interne (101) est dans une condition de moteur, le moteur à combustion interne (101) comportant une chambre de combustion (112), un collecteur d'admission (110) configuré pour recevoir et acheminer de l'air vers la chambre de combustion (112), un collecteur d'échappement (120) configuré pour recevoir des produits de combustion de la chambre de combustion (112), et un passage d'écoulement de recirculation des gaz (150) configuré pour acheminer les gaz d'échappement depuis le collecteur d'échappement (120) vers le collecteur d'admission (110) à travers une soupape de régulation d'écoulement de recirculation des gaz d'échappement (152) pouvant être commandée ;
l'ouverture, pendant la condition de moteur et sur la base de la détermination, d'une soupape de régulation d'écoulement de recirculation (152) dans une configuration de recirculation de moteur spécifiée pour réguler l'écoulement de gaz à travers le passage d'écoulement de recirculation (150) ; et
la fermeture, pendant la condition de moteur et sur la base de la détermination, d'une soupape d'admission (114) agencée en amont du collecteur d'admission (110), à une configuration d'admission de moteur spécifiée pour restreindre l'écoulement d'air vers le collecteur d'admission (110) ;
**caractérisé en ce que** la fermeture de la soupape d'admission (114) à la configuration d'admission de moteur spécifiée comprend la détermination d'un vide partiel dans le collecteur d'admission (110), et
le réglage de la soupape d'admission (114) pour réduire ou éliminer le vide partiel.

8. Support de stockage informatique non transitoire selon la revendication 7, les opérations comprenant en outre :
la détermination que le moteur à combustion interne (101) n'est pas en condition de moteur ;
la commande, sur la base de la détermination que le moteur à combustion interne (101) n'est pas en condition de moteur, de la soupape d'admission (114) sur la base d'une demande de papillon des gaz ; et
la commande, sur la base de la détermination que le moteur à combustion interne (101) n'est pas en condition de moteur, de la soupape de régulation d'écoulement de recirculation (152) sur la base d'une demande de retour de gaz d'échappement (EGR).

9. Procédé, comprenant :
la détermination qu'un moteur à combustion interne (101) est dans une condition de moteur, le moteur à combustion interne (101) comportant une chambre de combustion (112), un collecteur d'admission (110) configuré pour recevoir et acheminer de l'air vers la chambre de combustion (112), un collecteur d'échappement (120) configuré pour recevoir des produits de combustion de la chambre de combustion (112), et un passage d'écoulement de recirculation des gaz (150) configuré pour acheminer les gaz d'échappement depuis le collecteur d'échappement (120) vers le collecteur d'admission (110) à travers une soupape de régulation d'écoulement de recirculation (152) pouvant être commandée ;
l'ouverture, pendant la condition de moteur et sur la base de la détermination, d'une soupape de régulation d'écoulement de recirculation (152) dans une configuration de recirculation de moteur spécifiée pour réguler l'écoulement de gaz à travers le passage d'écoulement de recirculation (150) ; et
la fermeture, pendant la condition de moteur et sur la base de la détermination, d'une soupape d'admission (114) agencée en amont du collecteur d'admission (110), à une configuration d'admission de moteur spécifiée pour restreindre l'écoulement d'air vers le collecteur d'admission (110) ;
**caractérisé en ce que** la fermeture de la soupape d'admission (114) à la configuration d'admission de moteur spécifiée comprend la détermination d'un vide partiel dans le collecteur d'admission (110), et le réglage de la soupape d'admission (114) pour réduire ou éliminer le vide partiel.

10. Procédé selon la revendication 9, ou support de stockage informatique non transitoire selon la revendication 7 ou 8, la soupape d'admission (114) étant un papillon des gaz du moteur à combustion interne (101).

11. Procédé selon la revendication 9 ou 10, ou support de stockage informatique non transitoire selon les revendications 7, 8 ou 10, la détermination du fait que le moteur à combustion interne (101) est dans la condition de moteur comprenant la détermination de l'existence de conditions qui correspondent au fait que le moteur à combustion interne (101) est entraîné par des forces externes pour pomper l'air du collecteur d'admission (110) vers le collecteur d'échappement (120).

12. Procédé selon l'une quelconque des revendications 9 à 11, comprenant en outre :
la détermination que le moteur à combustion interne (101) n'est pas en condition de moteur ;
la commande, sur la base de la détermination que le moteur à combustion interne (101) n'est pas en condition de moteur, de la soupape d'admission (114) sur la base d'une demande de papillon des gaz ; et
la commande, sur la base de la détermination que le moteur à combustion interne (101) n'est pas en condition de moteur, de la soupape de régulation d'écoulement de recirculation (152) sur la base d'une demande de retour de gaz d'échappement (EGR).

13. Procédé selon l'une quelconque des revendications 9 à 12,
la configuration de recirculation de moteur spécifiée ouvrant la soupape de régulation d'écoulement de recirculation (152) pour permettre la recirculation des gaz d'échappement à travers le passage d'écoulement de recirculation (150) ; et
la configuration d'admission de moteur spécifiée fermant la soupape d'admission (114) pour bloquer l'écoulement d'air dans le collecteur d'admission (110).

14. Procédé selon l'une quelconque des revendications 9 à 13, comprenant en outre :
l'ouverture, pendant la condition de moteur et sur la base de la détermination, d'une soupape de régulation d'écoulement de dérivation (158) configurée pour commander un écoulement de gaz à travers un passage de dérivation (154), le passage de dérivation (154) étant configuré pour acheminer des gaz d'échappement autour d'un échangeur de chaleur (156) agencé dans le passage d'écoulement de recirculation des gaz (150) ;
la détermination que le moteur à combustion interne (101) n'est pas en condition de moteur ; et
la fermeture, sur la base de la détermination que le moteur à combustion interne (101) n'est pas en condition de moteur, de la soupape de régulation d'écoulement de dérivation (158).

15. Procédé selon l'une quelconque des revendications 9 à 14, comprenant en outre la modification du moteur à combustion interne (101), la modification comprenant :
la fourniture du passage d'écoulement de recirculation (150) ;
la fourniture de la soupape de régulation d'écoulement de recirculation (152) ;
le raccordement fluidique du passage d'écoulement de recirculation (150) au collecteur d'échappement (120) au niveau d'une première extrémité du passage d'écoulement de recirculation (150) ;
le raccordement fluidique du passage d'écoulement de recirculation (150) au collecteur d'admission (110) au niveau d'une seconde extrémité du passage d'écoulement de recirculation (150) ; et
la fourniture d'un dispositif de commande (160) configuré pour déterminer la condition de moteur et commander la soupape de régulation d'écoulement de recirculation (152) et la soupape d'admission (114) sur la base de la condition de moteur.
